# EUROPÄISCHE PATENTSCHRIFT

(11) **EP 2 866 486 B1**
(45) Veröffentlichungstag und Bekanntmachung des Hinweises auf die Patenterteilung: **28.03.2018**
(21) Anmeldenummer: 14184014.0
(22) Anmeldetag: 09.09.2014
(51) Int. Cl.: H04W 12/10, G06F 21/64, H04L 9/32

(54) **Verfahren zur Erzeugung einer elektronischen Signatur**
A method of generating an electronic signature
Procédé de génération d'une signature électronique

(30) Priorität: 25.10.2013 DE 102013221764
(43) Veröffentlichungstag der Anmeldung: 29.04.2015
(73) Patentinhaber: Bundesdruckerei GmbH, 10969 Berlin (DE)
(72) Erfinder: Schwan, Matthias, 10437 Berlin (DE); Wirth, Klaus Dieter, 12683 Berlin (DE)
(74) Vertreter: Richardt Patentanwälte PartG mbB

(56) Entgegenhaltungen:
- EP-A1- 2 582 115
- US-A1- 2010 170 942
- US-A1- 2012 131 348

## Beschreibung

Die Erfindung betrifft ein Verfahren zur Erzeugung einer elektronischen Signatur, ein Computersystem und eine Signaturvorrichtung.

Aus dem Stand der Technik ist die Erzeugung elektronischer Signaturen mithilfe von Chipkarten, wie zum Beispiel sogenannter Signaturkarten, oder auch mithilfe des elektronischen Personalausweises der Bundesrepublik Deutschland bekannt. Die entsprechenden rechtlichen Rahmenbedingungen für elektronische Signaturen sind beispielsweise in dem Gesetz über Rahmenbedingungen für elektronische Signaturen der Bundesrepublik Deutschland vom 16.05.2001 festgelegt.

Ein Verfahren zur Erzeugung einer Signatur mit Hilfe eines mobilen Geräts, beispielsweise eines tragbaren Computers oder eines Mobilfunkgerätes, ist in der US 2012/0131348 A1 gezeigt. DE102009045544 betrifft ein Verfahren zur Erhöhung der Sicherheit bei der Erstellung elektronischer Signaturen mittels Chipkarte. Das erfindungsgemäße Verfahren sieht insbesondere eine visuelle Verifikation der zu signierenden Daten vor, um eine vertrauenswürdige Signierung zu gewährleisten. Der Erfindung liegt die Aufgabe zugrunde, ein verbessertes Verfahren zur Erzeugung einer elektronischen Signatur zu schaffen sowie ein entsprechendes Computersystem und eine Signaturvorrichtung.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Unter einer "elektronischen Signatur" wird hier eine digitale Signatur verstanden, die mithilfe eines kryptografischen Verfahrens erzeugt wird, insbesondere eine signaturgesetzkonforme elektronische Signatur, wie zum Beispiel eine qualifizierte elektronische Signatur. Eine elektronische Signatur eines Dokuments kann beispielsweise dadurch erzeugt werden, dass mithilfe eines privaten Schlüssels eines asymmetrischen kryptografischen Schlüsselpaars eines Nutzers ein Hashwert des Dokuments verschlüsselt wird.

Unter einem "elektronischen Dokument" wird hier insbesondere eine Datei verstanden, wie zum Beispiel eine Worddatei, Excel-Datei, PDF-Datei, HTML-Datei oder eine Vektorgrafik-Datei, wobei die Datei mithilfe eines Anwendungsprogramms erstellt oder bearbeitet werden kann und mithilfe eines Viewers, insbesondere eines Trusted Viewers, wiedergegeben werden kann. Bei der Wiedergabe einer solchen Datei durch einen Viewer spricht man auch von dem sogenannten Rendering oder Bildsynthese.

Unter einem "Trusted Viewer" wird hier ein Anzeigeprogramm, also ein viewer, verstanden, welches zum Rendering eines elektronischen Dokuments dient, um dieses auf einer Anzeigevorrichtung anzuzeigen. Bei einem Trusted Viewer handelt es sich um eine vertrauenswürdige Softwarekomponente, die gegen Manipulationen geschützt ist. Beispielsweise kann der Programmcode des Trusted Viewers hierzu von einer herausgebenden Instanz signiert sein. Vor der Ausführung des Trusted Viewers wird dann zunächst beispielsweise durch das Betriebssystem des Computers geprüft, ob die Signatur des Trusted Viewers valide ist. Nur wenn die Signatur valide ist, wird der Trusted Viewer von dem Computer ausgeführt. Dadurch wird sichergestellt, dass die Wiedergabe des elektronischen Dokuments auf der Anzeigevorrichtung des Computers tatsächlich der zu signierenden Datei entspricht und nicht manipuliert worden ist.

Unter einem "Komprimierungswert" wird hier ein aus Daten abgeleiteter Wert bezeichnet, der im Vergleich zu den Daten einen geringeren Informationsgehalt aufweist. Bei diesen Daten kann es sich zum Beispiel um ein elektronisches Dokument oder einen Komprimierungswert handeln, der nochmals komprimiert wird. Beispielsweise kann es sich bei einem Komprimierungsverfahren zur Erzeugung des Komprimierungswerts um ein Hash-Verfahren oder eine andere Abbildungsvorschrift handeln, die mit einem Informationsverlust behaftet ist, wie zum Beispiel die Bildung einer Quersumme aus den Daten.

Unter einer "Visualisierung des Komprimierungswerts" wird hier die Generierung von Daten verstanden, die zur Wiedergabe auf einer Anzeigevorrichtung des Computers beziehungsweise eines Displays einer Signaturvorrichtung geeignet sind, und die eine alphanumerische Repräsentation oder eine grafische Repräsentation des Komprimierungswerts bilden. Eine alphanumerische Repräsentation des Komprimierungswerts kann beispielsweise dadurch erzeugt werden, dass der Komprimierungswert nochmals mit einem anderen oder dem gleichen Komprimierungsverfahren komprimiert wird. Eine grafische Repräsentation des Komprimierungswerts kann man dagegen durch ein Information-Visualization-Verfahren erzeugen.

Unter einem "Information-Visualization-Verfahren" wird hier ein Verfahren verstanden, welches aus einem Komprimierungswert eine charakteristische grafische Repräsentation ableitet. Hierzu wird beispielsweise der Komprimierungswert in mehrere Datenpakete zerlegt, sodass man daraus mehrdimensionale Daten ("MultiDimensional Data") erhält. Beispielsweise wird hierzu eine Binärdarstellung des Komprimierungswerts in Bitstrings einer vorgegebener Länge zerlegt, wobei jeder der Bitstrings eine Dimension ergibt. Die so erhaltenen mehrdimensionalen Daten lassen sich dann zum Beispiel mittels "geometrically transformed display techniques", "iconic display techniques", "dense pixel techniques", "stacked display techniques" visualisieren, im dem durch solche Verfahren jeweils eine charakteristische grafische Repräsentation des Komprimierungswerts generiert wird (vgl. hierzu IEEE TRANSACTIONS ON VISUALIZATION AND COMPUTER GRAPHICS, VOL. 7, NO. 1, JANUARY-MARCH 2002, Seite 100, Information Visualization and Visual Data Mining, Daniel A. Keim; diese Publikation und die dort genannten Referenzen werden hiermit vollumfänglich zum Offenbarungsgehalt der vorliegenden Patentanmeldung gemacht). Für unterschiedliche Komprimierungswerte werden also mit einem vorgegebenen Information-Visualization-Verfahren unterschiedliche grafische Repräsentation generiert.

Unter einer "Signaturvorrichtung" wird hier insbesondere ein ID-Token verstanden. In der Signaturvorrichtung ist der geheime Schlüssel eines asymmetrischen kryptografischen Schlüsselpaars des Nutzers gespeichert, mithilfe dessen die Signaturvorrichtung einen Komprimierungswert des elektronischen Dokuments verschlüsseln kann, um hierdurch die elektronische Signatur zu erzeugen.

Unter einem "ID-Token" wird hier insbesondere ein tragbares elektronisches Gerät verstanden, welches zumindest einen Datenspeicher zur Speicherung des geheimen Schlüssels des Nutzers aufweist.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des geheimen Schlüssels integriert ist.

Insbesondere kann es sich bei der Signaturvorrichtung um eine Chipkarte, insbesondere ein elektronisches Ausweisdokument, mit integriertem Display handeln, wie es an sich zum Beispiel aus DE 10 2009 045 544 A1 und DE 10 2010 003 586 A1 bekannt ist.

Ausführungsformen der Erfindung sind besonders vorteilhaft, da der Nutzer eine erhöhte Sicherheit gegen Manipulationsversuche erhält.

Beispielsweise könnte der Komprimierungswert des elektronischen Dokuments, der durch den Computer erzeugt wird, auf dem Computer selbst oder bei seiner Übertragung zu der Signaturvorrichtung manipuliert werden. Ein solcher Manipulationsversuch kann nun dadurch unterbunden werden, dass die Visualisierung des Komprimierungswerts durch den Trusted Viewer auf der Anzeigevorrichtung des Computers angezeigt wird.

Die Signaturvorrichtung erzeugt ihrerseits ebenfalls eine Visualisierung des von dem Computer empfangenen Komprimierungswerts, welche auf dem Display der Signaturvorrichtung angezeigt wird, wobei die Signaturvorrichtung dasselbe Information-Visualization-Verfahren verwendet, wie der Computer. Der Nutzer kann nun visuell die auf der Anzeigevorrichtung des Computers wiedergegebene Visualisierung und die auf dem Display der Signaturvorrichtung wiedergegebene Visualisierung des Komprimierungswerts miteinander vergleichen. Sind die beiden Komprimierungswerte identisch, so müssen auch die von der Anzeigevorrichtung und dem Display wiedergegebenen Visualisierungen identisch sein.

Ist hingegen der Komprimierungswert manipuliert worden, so wird dies zu einer abweichenden Visualisierung des modifizierten Komprimierungswerts seitens der Signaturvorrichtung führen, die durch den Vergleich der auf der Anzeigevorrichtung und dem Display wiedergegebenen Visualisierungen für den Nutzer augenfällig wird. Dies ist insbesondere dann der Fall, wenn ein Information-Visualization-Verfahren verwendet wird, bei dem auch nur geringe Abweichungen in den zu visualisierenden Daten zu großen Abweichungen in der resultierenden grafischen Repräsentation führen.

Im Weiteren werden Ausführungsformen der Erfindung mit Bezugnahme auf die Figuren näher erläutert. Es zeigen:
- Figur 1: eine Ausführungsform eines erfindungsgemäßen Computers,
- Figur 2: ein Flussdiagramm einer Ausführungsform eines erfindungsgemäßen Verfahrens,
- Figur 3: ein Flussdiagramm einer weiteren Ausführungsform eines erfindungsgemäßen Verfahrens,
- Figur 4: ein Flussdiagramm einer weiteren Ausführungsform eines erfindungsgemäßen Verfahrens,
- Figur 5: eine weitere Ausführungsform eines erfindungsgemäßen Computersystems,
- Figur 6: eine weitere Ausführungsform eines erfindungsgemäßen Computersystems.

Im weiteren werden einander entsprechende oder identische Komponenten der nachfolgenden Ausführungsformen mit gleichen Bezugszeichen gekennzeichnet.

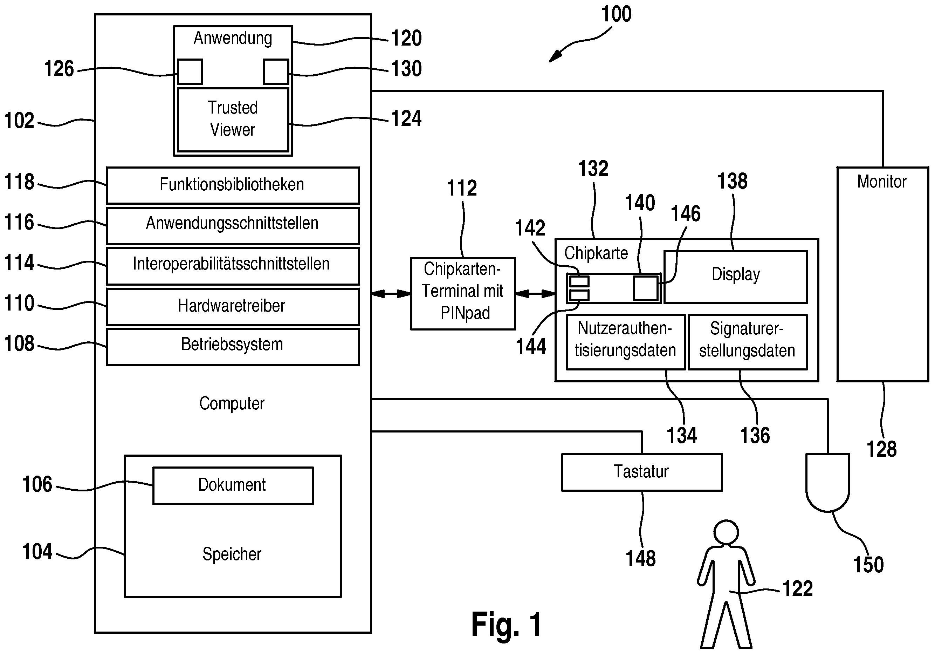

Die Figur 1 zeigt ein Computersystem 100 mit einem Computer 102. Bei dem Computer 102 kann es sich zum Beispiel um einen Personalcomputer, einen Laptop- oder Notebook-Computer oder einen anderen stationären oder portalen Computer handeln. Der Computer 102 hat einen elektronischen Speicher 104, in dem ein elektronisches Dokument 106, wie zum Beispiel eine Word- oder PDF-Datei, gespeichert ist.

Der Computer 102 hat ferner ein Betriebssystem 108, wie zum Beispiel ein Windows-Betriebssystem oder MacOS verschiedene Hardwaretreiber 110, wie zum Beispiel einen Hardwaretreiber für einen Chipkartenterminal 112, der an dem Computer 102 angeschlossen ist, sowie beispielsweise Interoperabilitäts-Schnittstellen 114, Anwendungs-Schnittstellen 116 und Funktionsbibliotheken 118.

Auf dem Computer 102 ist ein Anwendungsprogramm 120 installiert, welches zur Erstellung von Signatureingabedaten dient, beispielsweise also zur Erstellung oder Modifikation des elektronischen Dokuments 106. Beispielsweise handelt es sich bei dem elektronischen Dokument 106 um ein elektronisches Formular mit Eingabefeldern, die ein Nutzer 122 auszufüllen hat, bevor das Dokument 106 signiert wird.

Das Anwendungsprogramm 120 beinhaltet einen Trusted Viewer 124 oder kann auf einem Trusted Viewer des Computers 102 zugreifen. Beispielsweise hat der Trusted Viewer 124 einen Programmcode, der von einem Herausgeber des Trusted Viewers 124 signiert ist, wobei es sich bei dem Herausgeber um eine vertrauenswürdige Instanz handelt. Vor der Ausführung des Trusted Viewers 124 prüft das Betriebssystem 108 des Computers 102, ob die Signatur des Programmcodes valide ist und führt den Programmcode nur dann aus, wenn dies der Fall ist. Hierdurch ist eine Sicherheit gegen Manipulationsversuche des Trusted Viewers 124 gegeben. Alternativ oder zusätzlich können weitere Maßnahmen getroffen werden, um den Trusted Viewer 124 vor Manipulationsversuchen zu schützen, wie zum Beispiel die Installation von Antiviren-Programmen auf dem Computer 102.

Das Anwendungsprogramm 120 beinhaltet ferner ein Visualisierungsprogrammmodul 126 oder kann auf ein solches Programmmodul des Computers 102 zugreifen. Das Visualisierungsprogrammmodul 126 ist zur Erzeugung von Visualisierungsdaten ausgebildet, um eine Visualisierung eines Komprimierungswerts auf einem Monitor 128 des Computers 102 anzuzeigen. Je nach Ausführungsform kann es sich hierbei um eine alphanumerische Repräsentation oder eine grafische Repräsentation des Komprimierungswerts handeln, welche dann zur Visualisierung des Komprimierungswerts auf dem Monitor 128 angezeigt wird.

Das Anwendungsprogramm 120 beinhaltet ferner ein Komprimierungsprogrammmodul 130 oder hat auf ein Komprimierungsprogrammmodul des Computers 102 Zugriff. Das Komprimierungsprogrammmodul 130 implementiert ein Komprimierungsverfahren zur Erzeugung eines Komprimierungswerts, beispielsweise aus dem zu signierenden elektronischen Dokument 106 oder aus einem bereits vorliegenden Komprimierungswert. Beispielsweise implementiert das Komprimierungsprogrammmodul ein Hash-Verfahren, sodass es sich bei dem Komprimierungswert dann um einen Hash-Wert handelt. Alternativ oder zusätzlich kann das Komprimierungsprogrammmodul zum Beispiel die Bildung einer Quersumme zur Erzeugung des Komprimierungswerts implementieren.

Zur Erzeugung einer elektronischen Signatur für das elektronische Dokument 106 dient eine Signaturvorrichtung, die hier als Chipkarte 132 ausgebildet ist. Die Chipkarte 132 hat einen geschützten Speicherbereich 134 zur Speicherung von Nutzer-Authentisierungsdaten und einen geschützten Speicherbereich 136 zur Speicherung von Signatur-Erstellungsdaten des Nutzers 122, nämlich zumindest zur Speicherung von dessen privatem Schlüssel.

Bei den Nutzer-Authentifizierungsdaten kann es sich zum Beispiel um eine geheime PIN des Nutzers 122 und/oder biometrische Daten, wie zum Beispiel Fingerabdruckdaten des Nutzers 122 handeln.

Die Chipkarte 132 hat ein in einen Kartenkörper der Chipkarte 132 integriertes Display 138. Dabei kann es sich um ein grafikfähiges Display handeln. Das Display 138 kann sich über die gesamte Frontseite der Chipkarte 132 erstrecken.

Die Chipkarte 132 hat einen Prozessor 140 zur Ausführung eines Chipkarten-Betriebssystems 142 sowie eines Signatur-Erstellungsprogramms 144. Der Prozessor 140 dient ferner zur Ausführung eines Visualisierungsprogrammmoduls 146, zur Erzeugung von Visualisierungsdaten für einen von dem Computer 102 empfangenen Komprimierungswert, welche sich zur Wiedergabe auf dem Display 138 eignen, wobei das Visualisierungsprogrammmodul 146 dasselbe Visualisierungsverfahren, insbesondere ein Information-Visualization-Verfahren, implementiert, wie das Visualisierungsprogrammmodul 126.

Der Computer 102 hat ferner ein Nutzer-Interface, welches beispielsweise eine Tastatur 148 und eine Computermaus 150 beinhaltet.

Zur Erzeugung einer elektronischen Signatur wird beispielsweise wie folgt vorgegangen:
Der Nutzer 122 öffnet das Dokument 106 mithilfe des Anwendungsprogramms 120 beispielsweise durch Anklicken mit der Computermaus 150. Wenn es sich bei dem Dokument 106 beispielsweise um ein elektronisches Formular handelt, so füllt der Nutzer 122 das Formular aus. Anschließend gibt der Nutzer 122 ein Kommando in das Anwendungsprogramm 120 ein, um die Erzeugung einer elektronischen Signatur für das ausgeführte elektronische Dokument 106 anzufordern. Daraufhin wird das ausgefüllte Dokument 106 in dem trusted viewer 124 angezeigt. Nach Eingabe einer Freigabe durch den Nutzer 122 in den Computer 102, ruft das Anwendungsprogramm 120 das Komprimierungsprogrammmodul 130 auf, um aus dem ausgefüllten elektronischen Dokument 106 einen Komprimierungswert, wie zum Beispiel einen Hash-Wert, zu gewinnen.

Das Anwendungsprogramm 120 ruft dann einen der Hardwaretreiber 110 auf, um diesen Hash-Wert über den Chipkartenterminal 112 an die Chipkarte 123 zusammen mit einem Chipkartenkommando zur Erzeugung einer elektronischen Signatur zu übertragen. Ferner ruft das Anwendungsprogramm 120 das Visualisierungsprogrammmodul 126 auf, welches eine grafische Repräsentation des zuvor von dem Komprimierungsprogrammmodul 130 erzeugten Hash-Werts generiert, beispielsweise nach einem vordefinierten Information-Visualization-Verfahren.

Das Visualisierungsprogramm 146 implementiert dasselbe Information-Visualization-Verfahren wie das Visualisierungsprogrammmodul 126. Aufgrund des Empfangs des Hash-Werts über den Chipkartenterminal 112 von dem Computer 102 startet der Prozessor 140 die Ausführung des Visualisierungsprogrammmoduls 146, sodass auf dem Display 138 die grafische Repräsentation des Hash-Werts angezeigt wird. Der Nutzer 122 kann nun die Visualisierungen des Hash-Werts, die einerseits auf dem Monitor 128 und andererseits auf dem Display 138 angezeigt werden, miteinander vergleichen. Ist keine Abweichung augenfällig, so geht der Nutzer 122 davon aus, dass der Hash-Wert, den die Chipkarte 132 empfangenen hat, derselbe Hash-Wert ist, wie der von dem Komprimierungsprogrammmodul 130 erzeugte Hash-Wert. Im gegenteiligen Fall geht der Nutzer 122 davon aus, dass ein Manipulationsversuch vorliegt.

Nur wenn keine Abweichung zwischen den auf dem Display 138 und dem Monitor 128 angezeigten Visualisierungen des Hash-Werts besteht, gibt der Nutzer 122 anschließend seine Authentifizierungsdaten zur Authentifizierung gegenüber der Chipkarte 132 ein, beispielsweise in den Chipkartenterminal 112, wenn dieser mit einer Tastatur, das heißt einem sogenannten Pinpad, versehen ist. Beispielsweise liegt dann im Sinne der Erfindung keine Abweichung vor, wenn hinsichtlich der auf dem Display 138 und dem Monitor 128 angezeigten Visualisierungen des Hash-Werts geometrische Kongruenz vorliegt.

Die Prüfung daraufhin, ob keine Abweichung vorliegt, kann durch eine Sichtprüfung seitens des Nutzers durchgeführt werden, indem der Nutzer die Visualisierungen auf dem Display 138 und dem Monitor 128 optisch vergleicht, oder unter Zuhilfenahme technischer Einrichtungen. Beispielsweise kann der Nutzer die Visualisierungen, die auf dem Display 138 und dem Monitor 128 angezeigt werden mit einem optischen Sensor erfassen, z.B. einer elektronischen Kamera, und die so erfassten Aufnahmen der Visualisierungen durch ein Programm miteinander vergleichen lassen, um die Aufnahmen auf Übereinstimmung zu prüfen. Dies kann beispielsweise durch ein SmartPhone mit integrierter Kamera und einer auf dem SmartPhone installierten App erfolgen, die der Nutzer für die Prüfung auf Abweichungen startet.

Beispielsweise kann es sich bei dem Chipkartenterminal um einen sogenannten Klasse 2- oder Klasse 3- oder einen sogenannten Komfort-Chipkartenleser handeln.

Der Prozessor 140 greift dann auf den Speicherbereich 134 zu, um die Nutzer-Authentifizierungsdaten, die dort gespeichert sind, mit den von dem Nutzer 122 über den Chipkartenterminal 112 eingegebenen Authentifizierungsdaten zu vergleichen. Bei Übereinstimmung greift dann der Prozessor 140 auf den Speicherbereich 136 zu, um mithilfe des dort gespeicherten privaten Schlüssels den von dem Computer 102 empfangenen Hash-Wert zu verschlüsseln, wobei das Ergebnis dieser Verschlüsselung die digitale Signatur des elektronischen Dokuments 106 ist. Diese Signatur wird dann von der Chipkarte 132 über den Chipkartenterminal 112 an den Computer 102, das heißt das Anwendungsprogramm 120, übertragen, womit die Erzeugung der elektronischen Signatur für das ausgefüllte Dokument 106 abgeschlossen ist.

Vorzugsweise sind das Display 138 und der Monitor 128 unmittelbar nebeneinander angeordnet, wenn die Chipkarte 132 innerhalb der Reichweite des Chipkartenterminals ist. Dies hat den Vorteil, dass der Nutzer 122 sofort und intuitiv Abweichungen der jeweils angezeigten Visualisierungen erfassen kann, da sich beide Anzeigen gleichzeitig visuell von dem Nutzer 122 erfassen lassen.

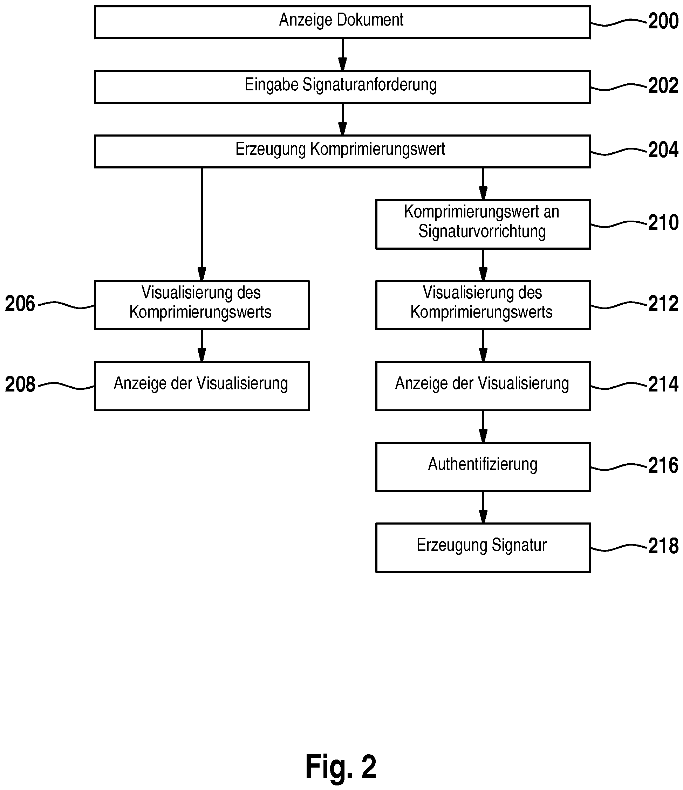

Die Figur 2 zeigt ein entsprechendes Flussdiagramm. In dem Schritt 200 wird das Dokument 106 auf dem Monitor 128 des Computers 102 angezeigt. Zur Signierung dieses Dokuments gibt der Nutzer in dem Schritt 202 eine Signaturanforderung in den Computer 102 ein. Daraufhin erzeugt der Computer 102 in dem Schritt 204 einen Komprimierungswert, beispielsweise einen Hash-Wert.

In dem Schritt 206 generiert der Computer 102 eine Visualisierung dieses Komprimierungswerts, beispielsweise durch ein vordefiniertes Information-Visualization-Verfahren, durch welches eine grafische Repräsentation des Komprimierungswerts erzeugt wird. Diese Visualisierung des Komprimierungswerts wird in dem Schritt 208 auf dem Monitor 128 des Computers 102 angezeigt.

Ferner wird nach dem Schritt 204 der Komprimierungswert von dem Computer 102 an eine Signaturvorrichtung, wie zum Beispiel die Chipkarte 132, übertragen (Schritt 210). Die Chipkarte 132 erzeugt daraufhin mithilfe desselben vorgegebenen Information-Visualization-Verfahrens, wie es seitens des Computersystems 192 implementiert ist, ebenfalls eine Visualisierung des Komprimierungswerts in dem Schritt 212. Diese Visualisierung des Komprimierungswerts wird in dem Schritt 214 auf dem Display 138 der Chipkarte 132 angezeigt.

Wenn der Komprimierungswert bei seiner Übertragung an die Chipkarte 132 nicht modifiziert worden ist, so stimmen die Anzeige der Visualisierung auf dem Display 138 beziehungsweise dem Monitor 128 überein, was dem Nutzer 122 signalisiert, dass kein Manipulationsversuch vorliegt. Der Nutzer 122 kann dann die Erzeugung der elektronischen Signatur dadurch auslösen, indem er in dem Schritt 216 seine Authentifizierungsdaten zur Authentifizierung gegenüber der Chipkarte 132 eingibt, beispielsweise in den Chipkartenterminal 112 oder unmittelbar an die Chipkarte 132. Unter der Voraussetzung einer erfolgreichen Authentifizierung des Nutzers 122 wird dann in dem Schritt 218 von der Chipkarte 132 die elektronische Signatur erzeugt (Schritt 218).

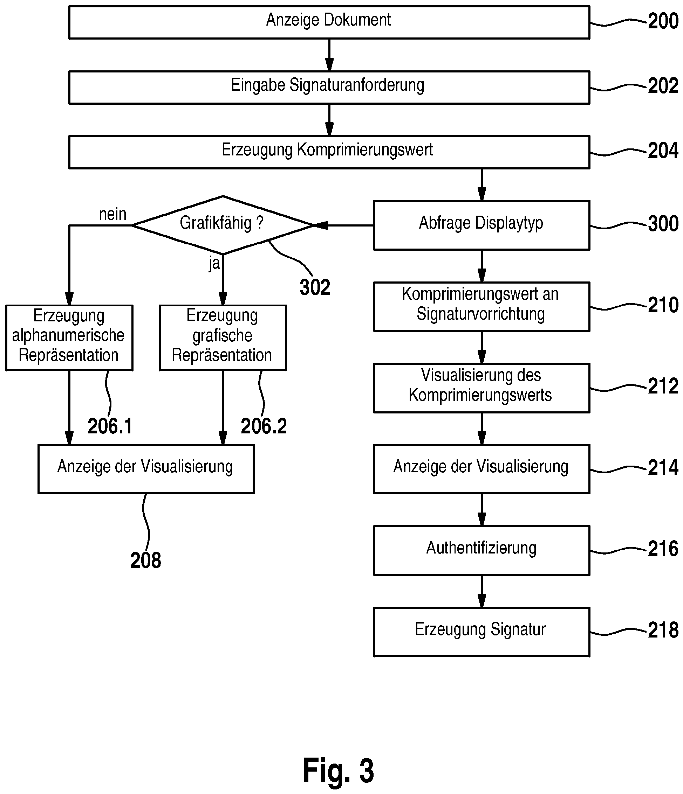

Die Figur 3 zeigt eine Weiterbildung des Verfahrens gemäß Figur 2. Bei dieser Ausführungsform fragt der Computer 102 in dem Schritt 300 den Displaytyp des Displays 138 von der Chipkarte 132 ab, indem beispielsweise ein entsprechendes Chipkartenkommando von dem Anwendungsprogramm 120 an die Chipkarte 132 gerichtet wird. In dem Schritt 302 entscheidet dann der Computer 102 in Abhängigkeit von der Antwort der Chipkarte 132 auf diese Abfrage, ob die Chipkarte 132 ein grafikfähiges Display 138 hat oder nicht und damit, welches Verfahren zur Repräsentation des Komprimierungswerts in Abhängigkeit des Displaytyps angewendet werden kann. Parameter für Displaytypen können z.B. für nicht graphikfähige Displays die Anzahl darstellbarer Zeichen und deren Auflösung sein. Für graphikfähige Displays sind Parameter wie Anzahl und Bezeichnung der unterstützten Farben, Größe und Auflösung bezeichnend.

Wenn das Display 138 nicht grafikfähig ist, so wird in dem Schritt 206.1 von dem Komprimierungsprogrammmodul 130 eine alphanumerische Repräsentation des zuvor in dem Schritt 204 erzeugten Komprimierungswerts generiert. Hierzu kann beispielsweise nochmals ein Hash-Verfahren angewendet werden oder eine Quersumme aus dem in dem Schritt 204 erzeugten Komprimierungswert gebildet werden. Die somit in dem Schritt 206.1 erzeugte Visualisierung des Komprimierungswerts wird dann in dem Schritt 208 auf dem Monitor 138 angezeigt.

Wenn hingegen der Displaytyp des Displays 138 grafikfähig ist (Schritt 302), so wird in dem Schritt 206.2 von dem Visualisierungsprogrammmodul 126 eine grafische Repräsentation des Komprimierungswerts erzeugt, beispielsweise nach einem vorgegebenen Information-Visualization-Verfahren, um somit eine Visualisierung des Komprimierungswerts zu erzeugen. Diese Visualisierung wird dann wiederum in dem Schritt 208 auf dem Monitor 128 angezeigt.

Auf der Seite der Chipkarte 132 ist entweder das Verfahren zur Erzeugung der alphanumerischen Repräsentation des Komprimierungswerts implementiert, so wie es auch auf der Seite des Visualisierungsprogramms 126 implementiert ist, und zwar für den Fall, dass die Chipkarte 132 ein nicht grafikfähiges Display 138 aufweist. Dagegen ist auf der Seite der Chipkarte 132 in dem Visualisierungsprogrammmodul 146 dasselbe Verfahren zur Erzeugung der grafischen Repräsentation implementiert, wie es auch auf der Seite des Computers 102, das heißt des Visualisierungsprogrammmoduls 126, der Fall ist, beispielsweise also das vorgegebene Information-Visualization-Verfahren. Dies hat zur Folge, dass die auf dem Monitor 128 beziehungsweise auf dem Display 138 angezeigten Visualisierungen identisch aussehen, wenn der Komprimierungswert bei seiner Übertragung zu der Chipkarte 132 nicht kompromittiert worden ist.

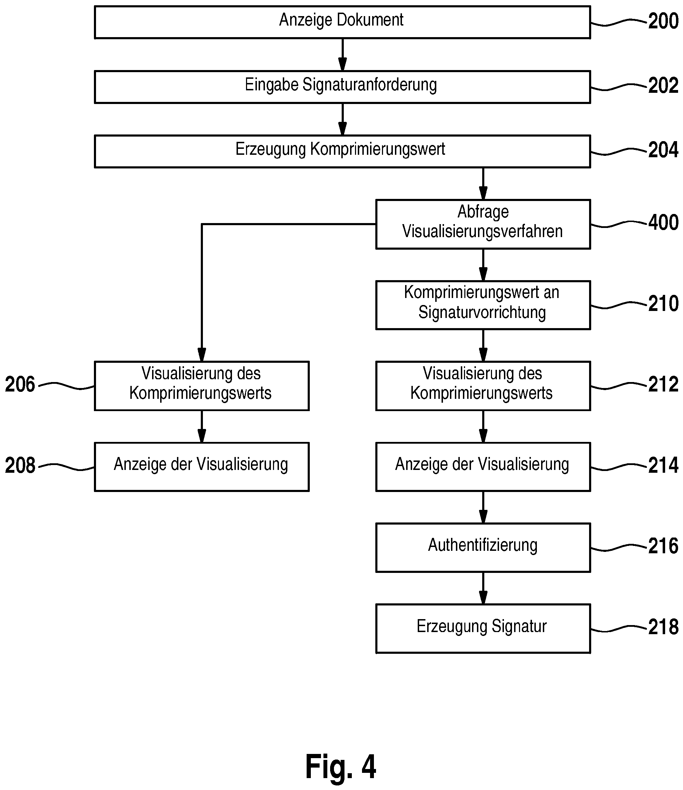

Die Figur 4 zeigt eine weitere Ausführungsform eines erfindungsgemäßen Verfahrens. Im Unterschied zu der Ausführungsform gemäß Figur 2 werden dabei verschiedene Chipkarten 132 unterstützt, die unterschiedliche Visualisierungsverfahren implementieren. Nach der Erzeugung des Komprimierungswerts in dem Schritt 204 fragt der Computer 102 zunächst in dem Schritt 400 von der Chipkarte 132 durch ein entsprechendes Chipkartenkommando ab, welches Visualisierungsverfahren die Chipkarte 132 in ihrem Visualisierungsprogrammmodul 126 implementiert. Genau dieses Visualisierungsverfahren wird dann anschließend in dem Schritt 206 auch von dem Visualisierungsprogrammmodul 126 des Computers 102 angewendet.

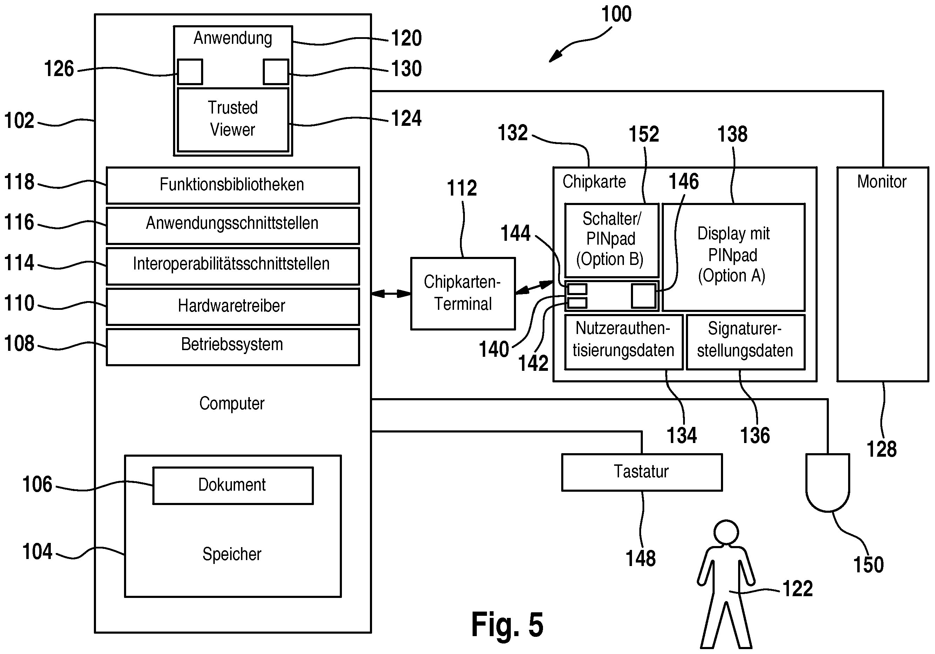

Die Figur 5 zeigt eine weitere Ausführungsform eines erfindungsgemäßen Computersystems. Im Unterschied zu der Ausführungsform gemäß Figur 1 erfolgt hier die Eingabe der Authentifizierungsdaten des Nutzers 122 unmittelbar in die Chipkarte 132 und nicht über den Chipkartenterminal 112. Hierzu hat die Chipkarte 132 ein Bedienelement 152, wie zum Beispiel einen Schalter oder ein Ein-Knopf-Bedienelement, eine Tastatur oder ein Pinpad zur Eingabe der Authentifizierungsdaten und/oder einen biometrischen Sensor zur Erfassung zum Beispiel von Fingerabdruckdaten des Nutzers 122. Alternativ zu dem Bedienelement 152 kann das Display 138 als Touch-sensitive Display ausgebildet sein, sodass die Eingabe der Authentifizierungsdaten des Nutzers 122 über das Display erfolgen kann.

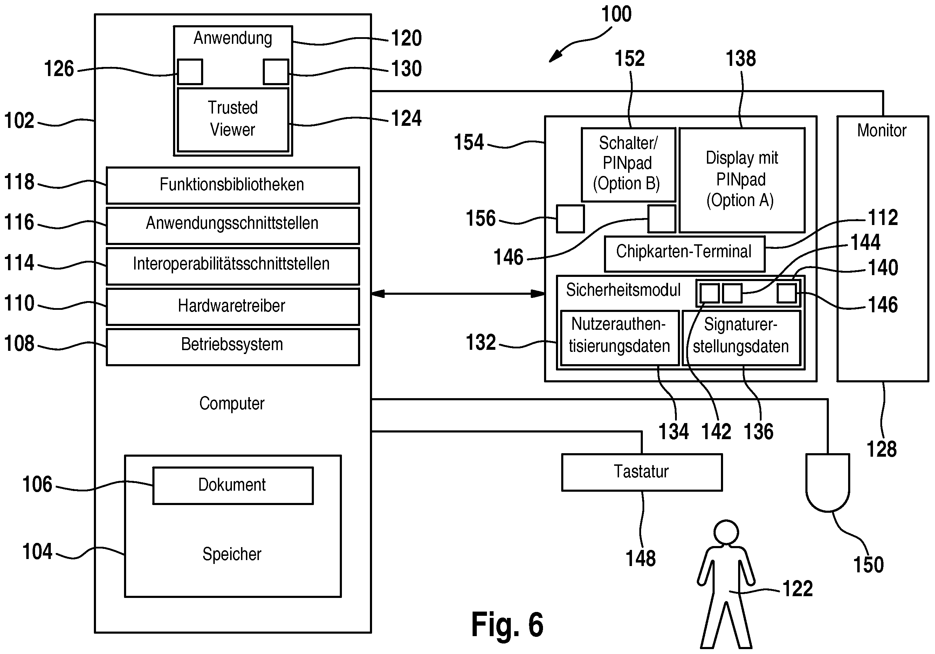

Die Figur 6 zeigt eine weitere Ausführungsform eines erfindungsgemäßen Computersystems, bei der die Funktionalität der Signaturvorrichtung in einem Mobilfunkgerät 154 implementiert ist. Das Mobilfunkgerät 154 hat eine drahtlose Schnittstelle 156 zu einem drahtlosen Kommunikationsnetzwerk, wie zum Beispiel eine WLAN-Schnittstelle und/oder eine Schnittstelle zu einem zellularen digitalen Mobilfunknetz, wie zum Beispiel ein GSM-, UMTS- oder LTE-Netz.

Das Mobilfunkgerät 154 hat einen integrierten Chipkartenterminal 112, wobei es sich bei der Chipkarte 132 hier beispielsweise um eine sogenannte SIM-Karte handeln kann. Das Visualisierungsprogrammmodul 146 kann dabei durch die Chipkarte 132 ausgeführt werden, wie es auch bei den Ausführungsformen gemäß Figuren 1 und 5 der Fall ist. Die Eingabe der Authentifizierungsdaten des Nutzers 122 kann wie in der Ausführungsform gemäß Figur 5 über ein Bedienelement 152 oder über das Display 138 erfolgen.

### Bezugszeichenliste

- 100: Computersystem
- 102: Computer
- 104: Speicher
- 106: elektronisches Dokument
- 108: Betriebssystem
- 110: Hardwaretreiber
- 112: Chipkartenterminal
- 114: Interoperabilitäts-Schnittstelle
- 116: Anwendungs-Schnittstelle
- 118: Funktionsbibliothek
- 120: Anwendungsprogramm
- 122: Nutzer
- 124: Trusted Viewer
- 126: Visualisierungsprogrammmodul
- 128: Monitor
- 130: Komprimierungsprogrammmodul
- 132: Chipkarte
- 134: Speicherbereich
- 136: Speicherbereich
- 138: Display
- 140: Prozessor
- 142: Chipkarten-Betriebssystem
- 144: Signaturerstellungs-Programmmodul
- 146: Visualisierungsprogrammmodul
- 148: Tastatur
- 150: Computermaus
- 152: Bedienelement
- 154: Mobilfunkgerät
- 156: Schnittstelle

## Patentansprüche

1. Verfahren zur Erzeugung einer elektronischen Signatur mit einem Computer (102) und einer Signaturvorrichtung (132), wobei es sich bei der Signaturvorrichtung um einen ID-Token, insbesondere ein Dokument, insbesondere ein Wert- oder Sicherheitsdokument, handelt, und wobei ein Lesegerät (112) für die Signaturvorrichtung an den Computer angeschlossen ist, mit folgenden Schritten:
- Anzeige eines elektronischen Dokuments (106) auf einer Anzeigevorrichtung (128) eines Computers (102) mithilfe eines Trusted Viewers (124),
- Eingabe (148, 150) eines Kommandos zur Erzeugung der elektronischen Signatur in den Computer durch einen Nutzer (122),
- Erzeugung (130) eines Komprimierungswerts des Dokuments durch den Computer, wobei es sich bei dem Komprimierungswert um einen Hash-Wert handelt,
- Visualisierung (126) des Komprimierungswerts auf der Anzeigevorrichtung,
- Übertragung (112) des Komprimierungswerts von dem Computer an eine Signaturvorrichtung (132) des Nutzers,
- Visualisierung (146) des Komprimierungswerts auf einem Display (138) der Signaturvorrichtung,
- Authentifizierung des Nutzers gegenüber der Signaturvorrichtung, wobei die Eingabe der Authentifizierungsdaten zur Authentifizierung des Nutzers in das Lesegerät erfolgt,
- Erzeugung der elektronischen Signatur mithilfe des Komprimierungswerts durch die Signaturvorrichtung,
wobei die Visualisierung des Komprimierungswerts durch ein Information-Visualization-Verfahren erfolgt, wobei durch den Computer und die Signaturvorrichtung das gleiche Information-Visualization-Verfahren durchgeführt wird, um den Komprimierungswert auf der Anzeigevorrichtung (128) und auf dem Display (138) zu visualisieren.

2. Verfahren nach einem der vorhergehenden Ansprüche, wobei der Computer das von der Signaturvorrichtung verwendete Visualisierungsverfahren ausliest und die Visualisierung seitens des Computers mithilfe dieses Visualisierungsverfahrens erfolgt.

3. Verfahren nach einem der vorhergehenden Ansprüche, wobei die Eingabe der Authentifizierungsdaten zur Authentifizierung des Nutzers in die Signaturvorrichtung erfolgt.

4. Verfahren nach einem der vorhergehenden Ansprüche, wobei die Eingabe von Authentifizierungsdaten für die Authentifizierung des Nutzers nur dann erfolgt, wenn keine Abweichung zwischen der auf der Anzeigevorrichtung angezeigten Visualisierung des Komprimierungswerts und der auf dem Display der Signaturvorrichtung angezeigten Visualisierung des Komprimierungswerts besteht.

5. Verfahren nach einem der vorhergehenden Ansprüche, wobei die Eingabe von Authentifizierungsdaten für die Authentifizierung des Nutzers nur dann erfolgt, wenn geometrische Kongruenz zwischen der auf der Anzeigevorrichtung angezeigten Visualisierung des Komprimierungswerts und der auf dem Display der Signaturvorrichtung angezeigten Visualisierung des Komprimierungswerts besteht.

6. Verfahren nach einem der vorherigen Ansprüche, wobei das Information-Visualization-Verfahren eine Binärdarstellung des Komprimierungswerts in Bitstrings einer vorgegebener Länge zerlegt, wobei jeder der Bitstrings eine Dimension ergibt, wobei die so erhaltenen mehrdimensionalen Daten dann insbesondere mittels "geometrically transformed display techniques", "iconic display techniques", "dense pixel techniques" und/oder "stacked display techniques" visualisiert werden.

7. Computersystem zur Durchführung eines Verfahren nach einem der vorhergehenden Ansprüche, mit einem Computer (102), der Folgendes aufweist:
- ein Speicher (104) zur Speicherung eines elektronischen Dokuments (106),
- eine Anzeigevorrichtung (128),
- einen Trusted Viewer (124) zur Anzeige des elektronischen Dokuments auf der Anzeigevorrichtung,
- Mittel (130) zur Erzeugung eines Komprimierungswerts des elektronischen Dokuments zur Erzeugung einer elektronischen Signatur, wobei es sich bei dem Komprimierungswert um einen Hash-Wert handelt,
- Mittel (126) zur Erzeugung einer grafischen Repräsentation des Komprimierungswerts zur Anzeige auf der Anzeigevorrichtung,
- Mittel (112) zur Übertragung des Komprimierungswerts an eine Signaturvorrichtung (132),
- Mittel (112) zum Empfang der elektronischen Signatur von der Signaturvorrichtung,
wobei die grafische Repräsentation des Komprimierungswerts durch ein Information-Visualization-Verfahren erfolgt, wobei durch den Computer und die Signaturvorrichtung das gleiche Information-Visualization-Verfahren durchgeführt wird, um den Komprimierungswert auf der Anzeigevorrichtung (128) und auf dem Display (138) zu visualisieren.

8. Computersystem nach Anspruch 7, mit der Signaturvorrichtung (132), wobei die Signaturvorrichtung ein Display (138) beinhaltet und Mittel (146) zur Erzeugung der grafischen Repräsentation des Komprimierungswerts, um die grafische Repräsentation des Komprimierungswerts auf dem Display anzuzeigen, und Signaturmittel (144) zur Erzeugung der elektronischen Signatur, nachdem die Anzeige der grafischen Repräsentation auf dem Display erfolgt ist und unter der Voraussetzung, dass sich der Nutzer nach oder während der Anzeige der grafischen Repräsentation auf dem Display erfolgreich gegenüber der Signaturvorrichtung authentifiziert hat.

9. Computersystem nach Anspruch 7, wobei die Anzeigeseite der Anzeigevorrichtung und die Anzeigeseite des Displays unmittelbar nebeneinander angeordnet sind.

10. Signaturvorrichtung zur Erzeugung einer elektronischen Signatur mit einem Verfahren nach einem der Ansprüche 1 bis 6 mithilfe eines Komprimierungswerts eines elektronischen Dokuments (106), wobei es sich bei dem Komprimierungswert um einen Hash-Wert handelt, mit
• Mitteln (146) zur Erzeugung einer grafischen Repräsentation des Komprimierungswerts,
• einem Display (138) zur Anzeige der grafischen Repräsentation,
• Authentifizierungsmitteln (140, 134) zur Authentifizierung eines Nutzers (122) gegenüber der Signaturvorrichtung und
• Mitteln (144) zur Erzeugung der elektronischen Signatur aus dem Komprimierungswert,
wobei die Mitteln (144) zur Erzeugung der elektronischen Signatur so ausgebildet sind, dass die Erzeugung der elektronischen Signatur erst dann erfolgt, nachdem die Anzeige der grafischen Repräsentation auf dem Display zur Visualisierung des Komprimierungswerts erfolgt ist und sich der Nutzer erfolgreich gegenüber der Signaturvorrichtung authentifiziert hat, wobei die Erzeugung der grafischen Repräsentation mithilfe eines Information-Visualization-Verfahrens erfolgt, wobei es sich bei der Signaturvorrichtung um einen ID-Token, insbesondere ein Dokument, insbesondere ein Wert- oder Sicherheitsdokument handelt.

## Claims

1. A process for producing an electronic signature using a computer (102) and a signature device (132), the signature device (132) being an ID token, in particular a document, in particular a value or security document, and having a reader (112) that is connected to the computer, this process having the following steps:
- Displaying an electronic document (106) on a display device (128) of a computer (102) using a trusted viewer (124);
- Inputting (148, 150) into the computer, by a user (122), a command to produce the electronic signature;
- Producing (130), by the computer, a compression value of the document, the compression value being a hash value;
- Visualizing (126) the compression value on the display device;
- Transferring (112) the compression value from the computer to a signature device (132) of the user;
- Visualizing (146) the compression value on a display (138) of the signature device;
- Authenticating the user with respect to the signature device, the authentication data for authenticating the user being input into the reader;
- Producing, by the signature device, the electronic signature using the compression value;
the compression value being visualized by an information visualization process, the computer and the signature device carrying out the same information visualization process to visualize the compression value on the display device (128) and on the display (138).

2. A process according to any one of the preceding claims, the computer reading out the visualization process used by the signature device and using this visualization process to carry out its own visualization.

3. A process according to any one of the preceding claims, wherein the authentication data for authenticating the user is input into the signature device.

4. A process according to any one of the preceding claims, wherein the authentication data for authenticating the user is only input when there is no deviation between the visualization of the compression value displayed on the display device and the visualization of the compression value displayed on the display of the signature device.

5. A process according to any one of the preceding claims, wherein the authentication data for authenticating the user is only input when the visualization of the compression value displayed on the display device is geometrically congruent with the visualization of the compression value displayed on the display of the signature device.

6. A process according to any one of the preceding claims, wherein the information visualization process decomposes a binary representation of the compression value into bit strings of a specified length, each of the bit strings giving one dimension, the multidimensional data obtained in this way then being visualized, in particular by means of "geometrically transformed display techniques", "iconic display techniques", "dense pixel techniques", and/or "stacked display techniques".

7. A computer system for carrying out a process according to any one of the preceding claims, using a computer (102) that has the following:
- A memory (104) for storing an electronic document (106);
- A display device (128);
- A trusted viewer (124) for displaying the electronic document on the display device;
- Means (130) of producing a compression value of the electronic document to produce an electronic signature, the compression value being a hash value;
- Means (126) of producing a graphical representation of the compression value to display on the display device;
- Means (112) of transferring the compression value to a signature device (132);
- Means (112) of receiving the electronic signature from the signature device;
the graphical representation of the compression value being produced using an information visualization process, the computer and the signature device carrying out the same information visualization process to visualize the compression value on the display device (128) and on the display (138).

8. A computer system according to claim 7,
with the signature device (132), wherein
the signature device comprises a display (138) and means (146) to produce the graphical representation of the compression value, to display the graphical representation of the compression value on the display, and signature means (144) to produce the electronic signature, after the graphical representation has been displayed on the display, and on the condition that the user has successfully has authenticated himself with respect to the signature device after or during the display of the graphical representation on the display.

9. A computer system according to claim 7,
wherein the display page of the display device and the display page of the display are arranged directly next to one another.

10. A signature device to produce an electronic signature using a process according to any one of claims 1 through 6 using a compression value of an electronic document (106), the compression value being a hash value, with
• Means (146) of producing a graphical representation of the compression value;
• A display (138) to display the graphical representation;
• Authentication means (140, 134) to authenticate a user (122) with respect to the signature device; and
• Means (144) of producing the electronic signature from the compression value;
the means (144) of producing the electronic signature being designed so that the electronic signature is produced only after the graphical representation has been displayed on the display to visualize the compression value and the user has successfully authenticated himself with respect to the signature device, the graphical representation being produced using an information visualization process, the signature device being an ID token, in particular a document, in particular a value or security document.

## Revendications

1. Procédé de génération d'une signature électronique avec un ordinateur (102) et un dispositif de signature (132), où, dans le cas du dispositif de signature, il s'agit d'un jeton ID, notamment d'un document, notamment d'un document de valeur ou de sécurité, et où un lecteur (112) destiné au dispositif de signature est connecté à l'ordinateur, avec les étapes suivantes :
- affichage d'un document électronique (106) sur un dispositif d'affichage (128) d'un ordinateur (102) à l'aide d'une visionneuse sécurisée (124),
- saisie (148, 150) d'une commande pour la génération de la signature électronique dans l'ordinateur par un utilisateur (122),
- génération (130) d'une valeur de compression du document par l'ordinateur, où, dans le cas de la valeur de compression, il s'agit d'une valeur de hachage,
- visualisation (126) de la valeur de compression sur le dispositif d'affichage,
- transmission (112) de la valeur de compression de l'ordinateur vers un dispositif de signature (132) de l'utilisateur,
- visualisation (146) de la valeur de compression sur un afficheur (138) du dispositif de signature,
- authentification de l'utilisateur par rapport au dispositif de signature, où la saisie des données d'authentification pour l'authentification de l'utilisateur a lieu dans le lecteur,
- génération de la signature électronique à l'aide de la valeur de compression par le dispositif de signature,
où la visualisation de la valeur de compression a lieu par un procédé de visualisation d'information, où le même procédé de visualisation d'information est exécuté par l'ordinateur et le dispositif de signature afin de visualiser la valeur de compression sur le dispositif d'affichage (128) et sur l'afficheur (138).

2. Procédé selon l'une des revendications précédentes, dans lequel l'ordinateur lit le procédé de visualisation employé par le dispositif de signature et la visualisation du côté de l'ordinateur s'effectue à l'aide de ce procédé de visualisation.

3. Procédé selon l'une des revendications précédentes, dans lequel la saisie des données d'authentification pour l'authentification de l'utilisateur a lieu dans le dispositif de signature.

4. Procédé selon l'une des revendications précédentes, dans lequel la saisie des données d'authentification pour l'authentification de l'utilisateur n'a lieu que lorsqu'il n'y a aucune déviation entre la visualisation de la valeur de compression indiquée sur le dispositif d'affichage et la visualisation de la valeur de compression indiquée sur l'afficheur du dispositif de signature.

5. Procédé selon l'une des revendications précédentes, dans lequel la saisie des données d'authentification pour l'authentification de l'utilisateur n'a lieu que lorsqu'il y a une congruence géométrique entre la visualisation de la valeur de compression indiquée sur le dispositif d'affichage et la visualisation de la valeur de compression indiquée sur l'afficheur du dispositif de signature

6. Procédé selon l'une des revendications précédentes, où le procédé de visualisation d'information découpe la représentation binaire de la valeur de compression en chaînes de bits de longueur prédéfinie, où chacune des chaînes de bits révèle une dimension, où les données multidimensionnelles ainsi obtenues sont visualisées alors en particulier au moyen de « techniques d'affichage transformées géométriquement », de « techniques d'affichage iconique », de « techniques de pixels denses » et/ou de « techniques d'affichage superposé ».

7. Système informatique destiné à l'exécution d'un procédé selon l'une des revendications précédentes, avec un ordinateur (102) qui présente ce qui suit :
- une mémoire (104) destinée au stockage d'un document électronique (106),
- un dispositif d'affichage (128),
- une visionneuse sécurisée (124) destinée à l'affichage du document électronique sur le dispositif d'affichage,
- un moyen (130) destiné à la génération d'une valeur de compression du document électronique pour la génération d'une signature électronique, où, dans le cas de la valeur de compression, il s'agit d'une valeur de hachage,
- un moyen (126) destiné à la génération d'une représentation graphique de la valeur de compression pour l'affichage sur le dispositif d'affichage,
- un moyen (112) destiné à la transmission de la valeur de compression au dispositif de signature (132),
- un moyen (112) destiné à la réception de la signature électronique à partir du dispositif de signature,
où la représentation graphique de la valeur de compression a lieu par un procédé de visualisation d'information, où le même procédé de visualisation d'information est exécuté par l'ordinateur et le dispositif de signature afin de visualiser la valeur de compression sur le dispositif d'affichage (128) et sur l'afficheur (138).

8. Système informatique selon la revendication 7, doté d'un dispositif de signature (132) dans lequel le dispositif de signature contient un afficheur (138) et un moyen (146) destiné à la génération de la représentation graphique de la valeur de compression afin d'afficher la représentation graphique de la valeur de compression sur l'afficheur, et un moyen de signature (144) destiné à la génération de la signature électronique après que l'affichage de la représentation graphique ait eu lieu sur l'afficheur et à condition que l'utilisateur se soit authentifié avec succès vis-à-vis du dispositif de signature après ou pendant l'affichage de la représentation graphique sur l'afficheur.

9. Système informatique selon la revendication 7, dans lequel la page d'affichage du dispositif d'affichage et la page d'affichage de l'afficheur sont disposées immédiatement l'une à côté de l'autre.

10. Dispositif de signature destiné à la génération d'une signature électronique avec un procédé selon l'une des revendications 1 à 6, à l'aide d'une valeur de compression d'un document électronique (106), où, dans le cas de la valeur de compression, il s'agit d'une valeur de hachage, avec
* des moyens (146) destinés à la génération d'une représentation graphique de la valeur de compression,
* un afficheur (138) pour l'affichage de la représentation graphique,
* des moyens d'authentification (140, 134) destinés à l'authentification d'un utilisateur (122) vis-à-vis du dispositif de signature, et
* des moyens (144) destinés à la génération de la signature électronique à partir de la valeur de compression,
où les moyens (144) destinés à la génération de la signature électronique sont conçus de sorte que la génération de la signature électronique n'a lieu qu'après que l'affichage de la représentation graphique ait eu lieu sur l'afficheur pour la visualisation de la valeur de compression et que l'utilisateur se soit authentifié avec succès vis-à-vis du dispositif de signature, où la génération de la représentation graphique a lieu à l'aide d'un procédé de visualisation d'information, où, dans le cas du dispositif de signature, il s'agit d'un jeton ID, notamment d'un document, notamment d'un document de valeur ou de sécurité.
